# EUROPÄISCHE PATENTSCHRIFT

(11) **EP 0 336 119 B1**
(45) Veröffentlichungstag und Bekanntmachung des Hinweises auf die Patenterteilung: **14.07.1993**
(21) Anmeldenummer: 89103784.8
(22) Anmeldetag: 03.03.1989
(51) Int. Cl.: B01D 53/00

(54) **Verfahren zum Dekontaminieren von sauerstoffhaltigen Gasen, insbesondere von Abgasen**
Process for the decontamination of oxygen containing gases, especially of waste gases
Procédé pour la decontamination de gaz contenants de l'oxygène, en particulier de gaz d'échappment

(30) Priorität: 04.03.1988 DE 3807033
(43) Veröffentlichungstag der Anmeldung: 11.10.1989
(73) Patentinhaber: Hüttermann, Aloys, Prof. Dr., D-37077 Göttingen (DE)
(72) Erfinder: Hüttermann, Aloys, Prof. Dr., D-3400 Göttingen (DE); Majcherczyk, Andrzej, Mag.Chem., D-3400 Göttingen (DE); Zadrazil, Frantisek, Dr. Ing., 3171 Hillerse (DE)
(74) Vertreter: Harders, Gerhard, Dr.

(56) Entgegenhaltungen:
- EP-A- 0 085 757
- EP-A- 0 132 503
- EP-A- 0 192 237

## Beschreibung

Die vorliegende Erfindung betrifft ein Verfahren zum Dekontaminieren von sauerstoffhaltigen Gasen, insbesondere von Abgasen gemäß dem Oberbegriff des Hauptanspruchs.

Zur Sanierung von Böden, die beispielsweise mit Polyaromaten kontaminiert waren, sind bereits hemicellulosehaltige Abfallstoffe, wie beispielsweise Strohhäcksel, verwendet worden, die mit Weißfäulepilzen beimpft worden waren. Dabei wird der kontaminierte Boden z. B. in einer Erdaufbereitungsanlage zerkleinert und homogen mit Strohhäckseln durchmischt, die mit dem jeweils geeigneten Pilzstamm beimpft worden waren. Diese Mischung wird in gewohnter Weise aufgeschichtet und kompostiert und der Verlauf der Dekontaminierung durch regelmäßige Analysen kontrolliert. Ein solches Verfahren ist beispielsweise in der deutschen Patentanmeldung P 37 31 816.0 beschrieben. Dabei können in den günstigsten Fällen Abbauraten von etwa 40 % erzielt werden.

In der EP-A-0 192 237 ist ein Verfahren zum Abbau von Bodenverunreinigungen beschrieben, in dem die Bodenverunreinigungen mit Pilzenzymen, z. B. von Weißfäulepilzen, die eine Lignin abbauende Oxygenase und Wasserstoffperoxid enthalten, unter aeroben Bedingungen umgesetzt werden. Dabei können die Verunreinigungen mit Lignin, Cellulose, Altpapier, Holzspänen, Sägemehl oder Humus vermischt werden.

Ein Verfahren zum Dekontaminieren von sauerstoffhaltigen Gasen, insbesondere von Abgasen, mit Hilfe von Weißfäulepilzen ist bisher nicht bekannt geworden. Die Möglichkeit der Schadstoffentfernung aus der Luft mit Hilfe von Mikroorganismen ist gegenüber der Schadstoffentfernung aus festen oder flüssigen Stoffen bisher als begrenzt angesehen worden (Deutscher Bundestag, Drucksache 10/6775 vom 06.01.87).

Die EP-A-0 132 503 und 0 085 757 beschreiben Verfahren, bei denen die Abgase über ein Absorbens auf Basis von noch nicht vollständig verrottetem kompost geführt werden. Als Mikroorganismen werden dabei Bakterien, Pilze oder Kleintiere, wie Erdmilben oder Nematoden eingesetzt. Die eingesetzten Pilze sind aus den Species Actinomycetes, Penicillium, Cephalosporium, Mucor, Circinella, Cephalothecium, Ovularia und Stemphyllium ausgewählt. Die Abbauraten sind gering.

Aufgabe der vorliegenden Erfindung ist es, ein leistungsfähigeres Verfahren zu schaffen, in dem die bekannte Aromatenabbauende Wirkung der Weißfäulepilze zur Dekontaminierung von Gasen ausgenutzt wird.

Gelöst wird diese Aufgabe durch die Merkmale im Kennzeichen des Hauptanspruchs.

Wenn die genannten Abfallstoffe mit Weißfäulepilzen beimpft werden, durchwachsen die sich bildenden Pilzmycelien die Abfallstoffe, wodurch zusammenhängende Formkörper gebildet werden. Der Zusammenhalt der Formkörper kann durch Anwendung eines leichten Preßdrucks, etwa in der Größenordnung von bis 10 bar, noch verbessert werden. Bei vielen Abfallstoffen, wie beispielsweise bei aufgeschichtetem Stroh, werden die gebildeten Formkörper schon durch den Eigendruck des geschichteten Materials verfestigt, wobei Schichthöhen bis zu mehreren Metern verwendet werden können. Auf diese Weise können Formkörper beispielsweise direkt in Rohren, Kolonnen und dergl. gebildet werden, indem die Abfallstoffe beispielsweise in beimpftem Zustand in die jeweiligen Behälter eingegeben werden und das den Formkörper verfestigende Mycel kultiviert wird. Es ist aber auch möglich, die Formkörper erst nach der Ausbildung der die Abfallstoffe durchwachsenden Mycelien in den gewünschten Formen herzustellen. Demgemäß können die Formkörper die verschiedensten Formen aufweisen, wie z. B. zylinderförmige oder scheibenförmige Ausbildungen, die direkt in die von den zu dekontaminierenden Gasen durchströmten Rohre eingebracht werden, oder Formkörper in Ausbildungen, die in Aufschüttungen Zwischenräume bilden, die ein Durchströmen der zu dekontaminierenden Gase begünstigen. Solche Formen sind beispielsweise zylindrische Rohrabschnitte, z. B. in Form der sogenannten Raschig-Ringe, oder vieleckige Körper, wie z. B. Tetraeder, Pyramiden usw., oder Körper mit abstehenden Teilen, wie z. B. Tetrapoden. Es liegt auf der Hand, daß die äußere Form der Formkörper nahezu beliebig sein und keinerlei Beschränkung unterliegt, solange Aufschüttungen der Formkörper eine hinreichende Durchlaßfähigkeit aufweisen. Vorzugsweise sollen die Formkörper, insbesondere Formkörper, die in Form von Aufschüttungen verwendet werden, einen Mindestdurchmesser von etwa 0,5 cm aufweisen.

Als land-, forst- oder fischwirtschaftliche Abfallstoffe bzw. als Abfallstoffe der Holzverarbeitung werden vorzugsweise Stroh, Pflanzenteile, Holzstücke, z. B. Splitterholz, Holzchips, Stammholz und dergl., Krebs- oder Krabbenschalen, Spanplattenabfall und dergl. verwendet. Das Pilzmycel wächst durch diese Abfallstoffe hindurch, außerdem können sie in vielen Fällen als Nährstoffgrundlage für die Pilze dienen. Wenn das Pilzmycel die Abfallstoffe durchwachsen hat, was im allgemeinen nach einer Kultivationszeit von etwa 10 bis 30 Tagen der Fall ist, weisen die so gebildeten Formkörper im allgemeinen bereits eine hinreichende Formstabilität auf, um ihre Handhabbarkeit zu gewährleisten. Durch Anwendung eines leichten Preßdrucks von etwa bis 10 bar läßt sich die Handhabbarkeit noch verbessern.

Für das erfindungsgemäße Verfahren können alle Weißfäulepilze verwendet werden. Vorzugsweise werden beispielsweise Polyporus spec., Stereum spec., Marasmius spec., Pleurotus spec. oder Sporotrichum spec. verwendet.

Das erfindungsgemäße Verfahren eignet sich zur Dekontaminierung von allen Gasen, die Sauerstoff enthalten. Der Gehalt an Sauerstoff sollte vorzugsweise nicht unter etwa 3 Vol-.% betragen, um eine hinreichende Dekontaminierung durch die aeroben Weißfäulepilze zu gewährleisten. Bei unzureichendem Sauerstoffgehalt müssen die zu kontaminierenden Gase mit Sauerstoff angereichert werden, beispielsweise durch Zugeben von Luft.

Um ein Austrocknen der mit dem Mycel durchwachsenen Abfallstoffe nach Möglichkeit zu vermeiden, können die zu dekontaminerenden Gase je nach Bedarf mit Wasser angereichert werden. Dies kann durch Einsprühen von Wasser in den zu dekontaminierenden Gasstrom, z. B. bis zur Sättigung geschehen.

Das erfindungsgemäße Verfahren eignet sich zur Dekontaminierung von allen sauerstoffhaltigen Gasen, insbesondere von Abgasen. Aufgrund ihres breiten Wirkungsspektrums können Weißfäulepilze nahezu alle organischen Stoffe und flüchtigen anorganischen Stoffe verwerten. Das erfindungsgemäße Verfahren eignet sich daher zur Dekontaminierung von Gasen, die organische Stoffe enthalten, insbesondere halogenierte Kohlenwasserstoffe, aromatische Verbindungen, polymerisierbare Verbindungen, wie z. B. Styrol und dergl., Stäube, wie z.B. Holzstaub, flüchtige organische Verbindungen, wie Schwefelwasserstoff, Blausäure und deren Derivate, wie Cyanate und dergl., Ammoniak, Phosphorwasserstoff oder Stickoxide.

Das erfindungsgemäße Verfahren ermöglicht z.B. beim einmaligen Durchströmen einer 200 cm dicken Schicht einen Abbau von kontaminierenden Aromaten, wie Styrol, bis in ein Größenordnung von über 99 % des Gesamtgehalts, verglichen mit einem Abbau von lediglich etwa 40 % bei kontaminierten Feststoffen.

Die Erfindung wird nachfolgend durch Beispiele näher erläutert.

### Beispiel 1

### Anzucht der Weißfäulepilze

Von Agarplattenkulturen der Versuchsorganismen wurden kleine Mengen Mycel (5x5 mm) steril abgenommen und in 30 ml Flüssigmedium BSM in 500 ml Erlenmeyerkolben überführt. Das Flüssigmedium BSM ist wie folgt zusammengesetzt:

| | |
|---|---|
| 5 g | Glucose |
| o,5 g | Hefeextrakt |
| 0,5 g | Asparagin |
| 1 g | KH₂PO₄ |
| 0,5 g | MgSO₄.7H₂O |
| 0,5 g | KCl |
| 0,01 g | FeSO₄.7H₂O |
| 0,008g | Mn(CH₃COO)₂.4H₂O |
| 0,002g | ZnNO₃ |
| 0,05 g | Ca(NO₃)₂.4H₂O |
| 0,003g | CuSO₄.5H₂O |
| ad 1000ml | dest. Wasser |

Von diesen Stammkulturen ausgehend wurden für die jeweiligen Versuche neue Kulturen angesetzt, nachdem das Mycel ausreichend oberflächendeckend gewachsen war, was im allgemeinen nach 4 bis 8 Tagen der Fall war.

### Beispiel 2

Die Kulturen von Beispiel 1 wurden nach Erreichen eines guten oberflächendeckenden Wachstums zerkleinert und auf sterilisierte Weizenkörper überimpft.

Das so erhaltene Granulat kann wie die Suspension nach Beispiel 1 mit vorbehandeltem Stroh eingesetzt werden.

### Beispiel 3

Die Kulturen aus Beispiel 1 werden nach Erreichen eines guten Wachstums zerkleinert und in einen Fermenter überimpft, beispielsweise in einen Biostat U Fermenter der Firma Braun, Melsungen. Pro Charge werden ca 30 l Kulturflüssigkeit beimpft. Die beimpfte Kulturflüssigkeit wird belüftet und gerührt und bei einer konstanten Temperatur von 28° und bei einem konstanten pH-Wert von 5,0 vier Tage kultiviert. Danach wird die Mycelbrühe leicht mit einem Homogenisator, z. B. mit einem Ultroturrax, homogenisiert und als Impfsuspension für die Erzeugung der Formkörper verwendet.

### Beispiel 4

### Erzeugung von Substrat

### 1. Holz:

Als Substrate eignen sich alle Laub- und Nadelhölzer für die Herstellung der pilzdurchwachsenen Formkörper. Birkenund Pappelhölzer sind schnell zu besiedeln, werden aber nach Besiedlung durch die Pilze auch schneller abgebaut und haben als Formkörper eine Nutzungsdauer von etwa einem Jahr. Harthölzer, wie etwa Buche oder Eiche, werden langsamer besiedelt, haben dafür aber auch eine längere Nutzungsdauer bis zu etwa 2 bis 3 Jahren. Nadelhölzer haben eine mittlere Besiedlungszeit und Nutzungsdauer.

### a) Holzchips

Frisch gefälltes Holz wird mit einem bekannten Hacker zu Chips zerkleinert, wie sie für die Verarbeitung in der Zellstoffindustrie üblich sind. Die Chips werden einige Stunden in wasserdampfgesättigter Luft auf 60 bis 80° C erhitzt, danach auf 25° abgekühlt und mit Getreidekörner-Brut (wie aus Beispiel 2) oder flüssigem Impfmaterial (wie aus Beispiel 4) beimpft. Die Inkubation, d. h. das Einwachsen des Pilzes in das feste Substrat, erfolgt in einem Feststoff-Bioreaktor. Die Inkubationszeit beträgt je nach Pilzart und Holzsubstrat etwa 10 bis 30 Tage.

### b) Holzspäne

Frisch gefälltes Holz wird mit einem Zerspaner zerkleinert, wie sie zum Erzeugen von Holzspänen in der Spanplattenfabrikation üblich sind. Sie werden anschliessend hitzebehandelt und beimpft, wie bei Holzchips beschrieben.

### 2. Stroh:

Stroh wird auf eine Spanlänge von 0,5 bis 5 cm mit einer in der Landwirtschaft üblichen Maschine gehäckselt. Durch Wässern wird der Wassergehalt auf etwa 70 % eingestellt. Danach wird die Mischung einige Stunden auf eine Temperatur zwischen 60 und 80° C erhitzt und danach langsam auf 25° C abgekühlt und beimpft, wie bei Holzchips beschrieben.

### 3. Landwirtschaftliche Abfälle:

Die Abfälle werden zerkleinert und auf eine Korngröße von etwa 0,5 bis 5 cm gesiebt. Durch Wässern wird ein Wassergehalt von etwa 70 % eingestellt, falls erforderlich, fehlende Nährstoffe zugefügt und die Mischung, wie in den vorigen Beispielen beschrieben, hitzebehandelt. Die abgekühlten Substrate werden beimpft und inkubiert, wie bei Holzchips beschrieben.

### Beispiel 5

### Dekontaminierungsversuch

Ein nach Beispiel 4 mit dem Pilz Pleurotus ostreatus bewachsenes Stroh wurde in eine Säule von 5 cm Durchmesser und 200 cm Höhe mit einem Volumen von 3,0 l eingegeben. Kontaminierte Luft mit einer relativen Luftfeuchtigkeit von 96 % wurde mit einer Durchflußrate von 1 bis 1,5 l pro min durchgeblasen. Die Reaktortemperatur betrug 24° C. Dabei wurden über mehrere Tage hinweg dauerhaft die folgenden Dekontaminationsraten erzielt:
Styrol, Belastung 1245 mg/m³ Luft: 99,94 % Abbau
Styrol, Belastung 3000 mg/m³ Luft: 80,00 % Abbau
Der niedrigste Styrol-Wert entspricht dem zehnfachen Wert der derzeit zugelassenen maximalen Arbeitsplatzkonzentration (MAK).
Gesättigte Sulfitablaugen-Dämpfe: 100 % Abbau
Der Wert entspricht dem zehnfachen Wert, der nach der TA-Luft zulässig ist.

Die Abbauraten wurden olfaktorisch sowie durch spektroskopische Messungen überprüft.

## Patentansprüche

1. Verfahren zum Dekontaminieren von sauerstoffhaltigen Gasen, insbesondere von Abgasen, wobei die Gase über land-, forst- oder fischwirtschaftliche Abfälle oder Abfälle der Holzverarbeitung geleitet werden,
**dadurch gekennzeichnet, daß** die Abfälle als Formkörper eingesetzt werden, die mit Pilzmycelien von Weißfäulepilzen durchwachsen sind.

2. Verfahren nach Anspruch 1, dadurch gekennzeichnet, daß die Gase vor der Dekontaminierung mit Feuchtigkeit angereichert werden.

3. Verfahren nach Anspruch 1, dadurch gekennzeichnet, daß die zu dekontaminierenden Gase mindestens 3 vol.-% Sauerstoff enthalten.

4. Verfahren nach Anspruch 1, dadurch gekennzeichnet, daß als Abfallstoffe Stroh, Pflanzenteile, Holzstücke oder -Späne, Rindenteile, Krebs-oder Krabbenschalen oder Spanplattenabfälle verwendet werden.

5. Verfahren nach Anspruch 1, dadurch gekennzeichnet, daß die Formkörper einen Mindestdurchmesser von etwa 0,5 cm aufweisen.

6. Verfahren nach Anspruch 1, dadurch gekennzeichnet, daß Weißfäulepilze der folgenden Spezies eingesetzt werden: Polyporus spec., Stereum spec., Marasmius spec., Pleurotus spec. oder Sporotrichum spec.

## Claims

1. A process for the decontamination of a gas containing oxygen, especially waste gases, whereby the gases are passed over agricultural wastes, forestry wastes, fishery wastes ore wastes from the wood processing industry,
**characterized in that**
the wastes are used in form of formed bodies which are interpenetrated by a fungus mycelium of white rod fungi.

2. The process of claim 1, characrerized in that the gases are enriched with moisture prior to the decontamination.

3. The process of claim 1, characterized in that the gases to be decontaminated contain at least 3 % by volume of moisture.

4. The process of claim 1, characterized in that straw, plant parts, wood pieces, wood shavings, bark parts, crawfish shells, crab shells or particle board wastes are used as wastes.

5. The process of claim 1, characterized in that tie body forms have a diameter of at least about 0,5 cm.

6. The process of claim 1, characterized in that white rod fungi of the following species are used: Polyporus spec., Stereum spec., Marasmius spec., Pleurotus spec., or Sporotrichum spec.

## Revendications

1. Procédé de décontamination des gaz oxygénifères, en particulier des gaz d'échappement, au cours duquel les gaz sont passés sur des déchets agricoles, forestières ou des rebuts de poisson ou dos déchets do travail du bois,
**caractérisé en ce que**
lesdits déchets ou rebuts sont utilisés sous forme de corps moulés par lesquels viennent les mycèles de fungi de pourriture alvéolaire.

2. Procédé selon la revendication 1, caractérisé en ce que les gaz sont enrichis d'humidité avant leur décontamination.

3. Procédé selon la revendication 1, caractérisé en ce que les gaz à décontaminer contiennent au moins 3 % volumétriques d'oxygène.

4. Procédé selon la revendication 1, caractérisé en ce que'on utilise de la paille, de tronçons végétaux, des pans ou copeaux de bois, de tronçons d'écorce, des carapaces d'écrevisses ou crevettes ou des déchets de panneaux de particules en tant que déchets.

5. Procédé selon la revendication 1, caractérisé en ce que lesdits corps moulés présentent un diamètre minimal de 0.5 cm environ.

6. Procédé selon la revendication 1, caractérisé en ce qu'on utilise des fungi de pourriture alvéolaire des genres suivants: polyporus spec., stéréum spec., marasmius spec., pleurotus spec. ou sporotrichum spec.
